Europäisches Patentamt

European Patent Office

Office européen des brevets

(19)

(11)    EP 0 689 862 B1

## (12)    FASCICULE DE BREVET EUROPEEN

(45) Date de publication et mention
de la délivrance du brevet:
**27.03.2002   Bulletin 2002/13**

(51) Int Cl.⁷: **B01D 53/047**

(21) Numéro de dépôt: **95401518.6**

(22) Date de dépôt: **27.06.1995**

(54) **Procédé de traitement d'un mélange gazeux par adsorption à variation de pression**

Druckwechseladsorptionsverfahren zur Behandlung eines Gasgemisches

Process for treating a gas mixture by pressure swing adsorption

(84) Etats contractants désignés:
**DE ES IT NL**

(30) Priorité:  **27.06.1994   FR 9407886**

(43) Date de publication de la demande:
**03.01.1996   Bulletin 1996/01**

(73) Titulaire: **L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
• **Monereau, Christian
F-75011 Paris (FR)**
• **Petrie, Wilfrid
F-75116 Paris (FR)**

• **Barbe, Christian
F-92260 Fontenay Sous Bois (FR)**
• **Eclancher, Michel
F-92130 Issy Les Moulineaux (FR)**
• **Vigor, Xavier
F-75015 Paris (FR)**

(74) Mandataire: **Mercey, Fiona Susan et al
L'AIR LIQUIDE, SOCIETE ANONYME POUR
L'ETUDE ET L'EXPLOITATION DES PROCEDES
GEORGES CLAUDE,
75 quai d'Orsay
75321 Paris Cédex 07 (FR)**

(56) Documents cités:
EP-A- 0 082 948          EP-A- 0 537 612
EP-A- 0 537 831          DE-A- 3 030 081
GB-A- 2 003 742

EP 0 689 862 B1

**Description**

La présente invention est relative à un procédé de traitement d'un mélange gazeux, notamment d'air, et de fourniture d'un gaz de production extrait de ce mélange gazeux dans une unité à adsorption à variation de pression (PSA), utilisant trois adsorbeurs, du type à régénération sous vide de l'adsorbant par pompage, souvent désignée par "VSA" (Vacuum Swing Adsorption). Elle s'applique en particulier à la production d'oxygène impur à partir d'air atmosphérique, dite 'VSA $O_2$".

Le document DE-A-3 030 081, de 1980, décrit un procédé de ce type où, en production nominale, la pompe de régénération est bouclée sur elle-même pendant la phase d'équilibrage entre deux adsorbeurs.

Les appareils (adsorbeurs, soufflantes ou compresseurs d'introduction du mélange à traiter, pompe à vide) des unités VSA $O_2$ sont dimensionnés pour une production donnée dite nominale, correspondant à un débit, une pureté et une pression données de l'oxygène produit. Pour la production nominale, l'unité est ainsi optimisée. Lorsque pendant un certain temps, la demande en oxygène devient inférieure au débit nominal, l'unité doit être ajustée à ce nouveau débit. Les moyens connus pour réaliser cet ajustement sont les suivants :

(1) Simple réduction du débit d'oxygène soutiré, par fermeture partielle de la vanne de production d'oxygène ou, si l'oxygène est comprimé en sortie de l'unité, par action sur les organes de régulation de débit du compresseur.

L'inconvénient de cette technique est double : d'une part, la pureté de l'oxygène produit varie, et d'autre part, la consommation d'énergie de l'unité est la même pour une production réduite, ce qui augmente le coût spécifique de l'oxygène produit.

(2) Mise des machines en fonctionnement intermittent. Ce fonctionnement entraîne de nombreux redémarrages des machines, incompatibles avec leur fiabilité et/ou l'installation d'importantes capacités-tampons d'oxygène.

(3) Utilisation de moteurs à vitesse variable pour entraîner la soufflante (ou le compresseur) d'entrée et la pompe, ce qui permet d'allonger le temps de cycle tout en gardant les niveaux de pression du fonctionnement nominal.

L'inconvénient de cette technique réside dans le fait que les dispositifs de ce genre sont coûteux et entraînent, au débit nominal, une consommation d'énergie complémentaire due au rendement des variateurs de vitesse.

(4) Utilisation de moteurs à plusieurs vitesses, qui sont relativement coûteux et ne permettent d'obtenir que des marches réduites optimisées très ponctuelles, par exemple un fonctionnement à 100 % du débit nominal et un à 50 %.

L'invention a pour but de permettre de réduire à volonté le débit de gaz produit sans investissement additionnel substantiel, sans modification de la pureté du gaz produit et avec une réduction concomitante de l'énergie consommée.

A cet effet, l'invention a pour objet de proposer un procédé selon la revendication 1.

Le procédé suivant l'invention peut comporter une ou plusieurs des caractéristiques suivantes :

- lors d'une réduction du débit de production, pendant une fraction de l'étape de pompage on relie l'aspiration de la pompe uniquement à une source extérieure dudit gaz auxiliaire ;
- la durée du cycle est allongée de trois fois la durée de ladite fraction ;
- lors d'une réduction du débit de production, pendant au moins une fraction de l'étape de pompage, on relie l'aspiration de la pompe à la fois à un adsorbeur en phase de désorption et à une source extérieure dudit gaz auxiliaire ;
- lors d'une réduction du débit de production, pendant une fraction finale de la phase d'adsorption, on envoie du gaz de production à la sortie de l'adsorbeur dont l'entrée est reliée à l'aspiration de la pompe ;
- la phase de désorption comprend une étape initiale de décompression à co-courant et la phase de recompression comprend une étape initiale d'élution à contre-courant par du gaz issu d'un autre adsorbeur en cours d'étape de décompression à co-courant ;
- la phase de recompression comprend une étape de repressuration à contre-courant par du gaz de production ;
- le mélange gazeux à séparer est de l'air.

Des exemples de mise en oeuvre de l'invention vont maintenant être décrits en regard des dessins annexés, sur lesquels :

- la Figure 1 représente schématiquement une unité VSA $O_2$ destinée à la mise en oeuvre du procédé suivant l'invention ;
- la Figure 2 est un diagramme illustrant un cycle VSA auquel s'applique l'invention ; et
- les Figures 3 à 7 sont des diagrammes analogues illustrant respectivement cinq modes de mise en oeuvre du procédé de l'invention pour un débit de production réduit.

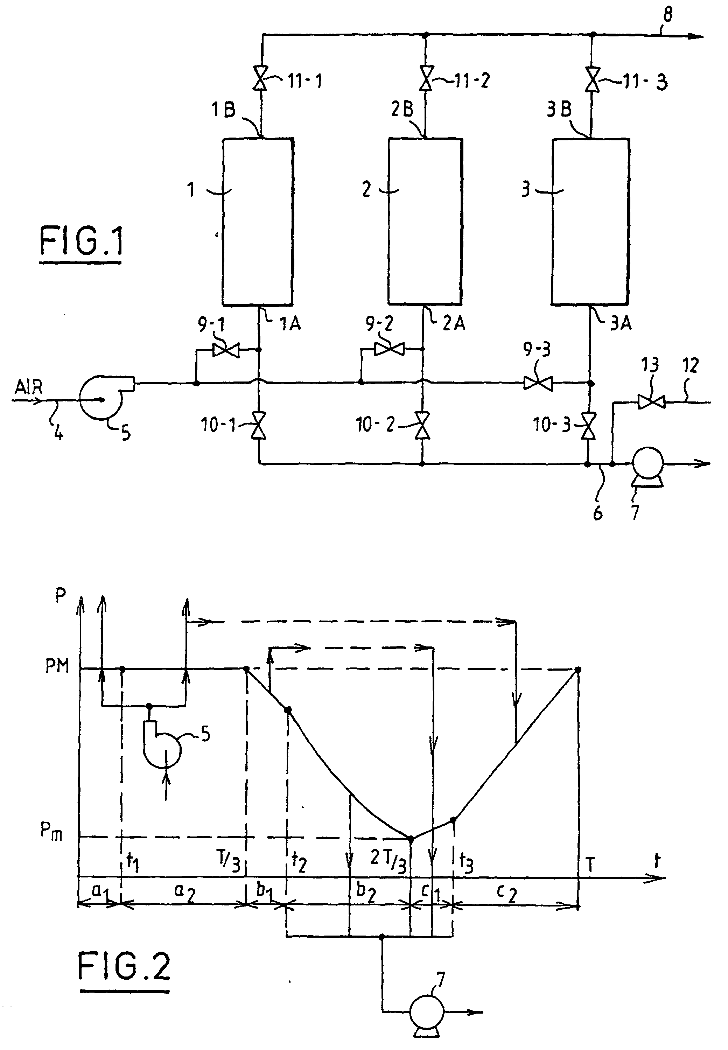

L'installation représentée à la Figures 1 est destinée à produire de l'air enrichi en oxygène, ou oxygène impur, à une teneur de préférence comprise entre 90 et 95 % environ, à partir d'air atmosphérique non épuré. Elle comprend trois adsorbeurs 1 à 3, une ligne d'admission 4 équipée d'un ventilateur ou d'une soufflante 5, une ligne de pompage 6 équipée d'une pompe à vide 7 refoulant à l'air libre, et une ligne 8 de production d'air enrichi. Chaque adsorbeur a une configuration cylindrique et comporte une entrée inférieure 1A à 3A et une sortie supérieure 1B à 3B. Les adsorbeurs sont emplis d'un adsorbant qui adsorbe préférentiellement l'azote par rapport à l'oxygène et à l'argon, notamment d'un tamis moléculaire de type 5A ou 13X. Eventuellement, chaque adsorbeur peut comporter à sa base une couche d'un autre adsorbant ayant une action de dessiccation, notamment d'alumine ou de gel de silice. La pompe 7 est volumétrique, par exemple du type Roots.

La ligne 4 est reliée à l'entrée de chaque adsorbeur par l'intermédiaire d'une vanne respective 9-1 à 9-3. De même, la ligne 6 est reliée à l'entrée de chaque adsorbeur par l'intermédiaire d'une vanne respective 10-1 à 10-3. La ligne 8 est reliée à la sortie de chaque adsorbeur par l'intermédiaire d'une vanne respective 11-1 à 11-3.

L'aspiration de la pompe 7 peut par ailleurs être reliée à l'air libre via une conduite 12 équipée d'une vanne 13.

Au moyen de cette installation, on réalise pour chaque adsorbeur, pour la production nominale d'air enrichi, un cycle que l'on a illustré à la Figure 2 en référence à l'adsorbeur 1. Si T désigne la durée du cycle, le fonctionnement de l'adsorbeur 2 s'en déduit par décalage dans le temps de T/3 et celui de l'adsorbeur 3 par décalage dans le temps de 2T/3. Dans l'exemple illustré, on peut choisir par exemple une durée de cycle de 1 minute à quelques minutes. Les machines 5 et 7 sont entraînées en permanence et à vitesse constante.

Sur la Figure 2, où les temps t sont portés en abscisses et les pressions absolues P en ordonnées, les traits orientés par des flèches indiquent les mouvements et destinations des courants gazeux; lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le sens du courant dans l'adsorbeur est à co-courant; si la flèche dirigée vers le haut est située au-dessous du trait indiquant la pression dans l'adsorbeur, le courant pénètre dans l'adsorbeur par l'extrémité d'entrée de l'absorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter par l'adsorbeur considéré et du gaz soutiré de ce même adsorbeur en phase d'adsorption; lorsqu'une flèche est dans le sens des ordonnées décroissantes (vers le bas du diagramme), le sens du courant dans l'adsorbeur est à contre-courant. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase d'adsorption. D'autre part, on a indiqué en traits pleins les courants gazeux qui concernent exclusivement un adsorbeur et en traits pointillés les courants gazeux en provenance ou en direction d'autres adsorbeurs.

Le cycle complet sera maintenant décrit pour un adsorbeur, par exemple l'adsorbeur 1, en référence aux Figures 1 et 2. Dans l'exemple de la Figure 2, le cycle évolue entre deux pressions extrêmes, à savoir une pression haute ou maximale PM comprise entre la pression atmosphérique et 1, 2 bar absolu, et une pression basse ou minimale Pm comprise entre 100 et 400 mb, ce qui explique l'utilisation de la soufflante 5 et de la pompe à vide 7.

Le cycle de la Figure 2 comporte :

(a) de t = 0 à T/3, une phase d'adsorption isobare à la pression PM, au cours de laquelle l'air atmosphérique à traiter est admis à l'entrée de l'adsorbeur et circule à co-courant dans celui-ci, tandis que du gaz (air enrichi en oxygène) est soutiré en sortie de l'adsorbeur. Cette phase se divise en deux étapes :

(a1) de t = 0 à t1, la totalité du gaz soutiré constitue du gaz de production, c'est-à-dire de l'air enrichi à 95% d'oxygène (que l'on pourra désigner dans la suite par le simple mot "oxygène");
(a2) de t1 à T/3, une partie du gaz soutiré constitue du gaz de production, et le reste est transféré à la sortie d'un autre adsorbeur en phase de recompression;

(b) de T/3 à 2T/3, une phase de désorption, qui est subdivisée en deux étapes :

(b1) de T/3 à t2, avec t2 - T/3 = t1, une étape de décompression à co-courant, au cours de laquelle du gaz est soutiré en sortie de l'adsorbeur et transféré à la sortie d'un autre adsorbeur en début de phase de recompression; et
(b2) de t2 à 2T/3, une étape de pompage à contre-courant, dans laquelle l'entrée de l'adsorbeur est reliée à l'aspiration de la pompe 7.

(c) de 2T/3 à T, une phase de recompression, qui est subdivisée en deux étapes :

(c1) de 2T/3 à t3, avec t3 - 2T/3 = t1, une phase d'élution avec pompage dans laquelle l'adsorbeur reçoit par sa sortie du gaz issu de la sortie d'un autre adsorbeur en étape (b1) de décompression à co-courant, pendant qu'un débit inférieur de gaz est aspiré à contre-courant par la pompe 7; et
(c2) de t3 à T; une étape de recompression à contre-courant par du gaz prélevé à la sortie d'un autre adsorbeur en étape (a2) d'adsorption.

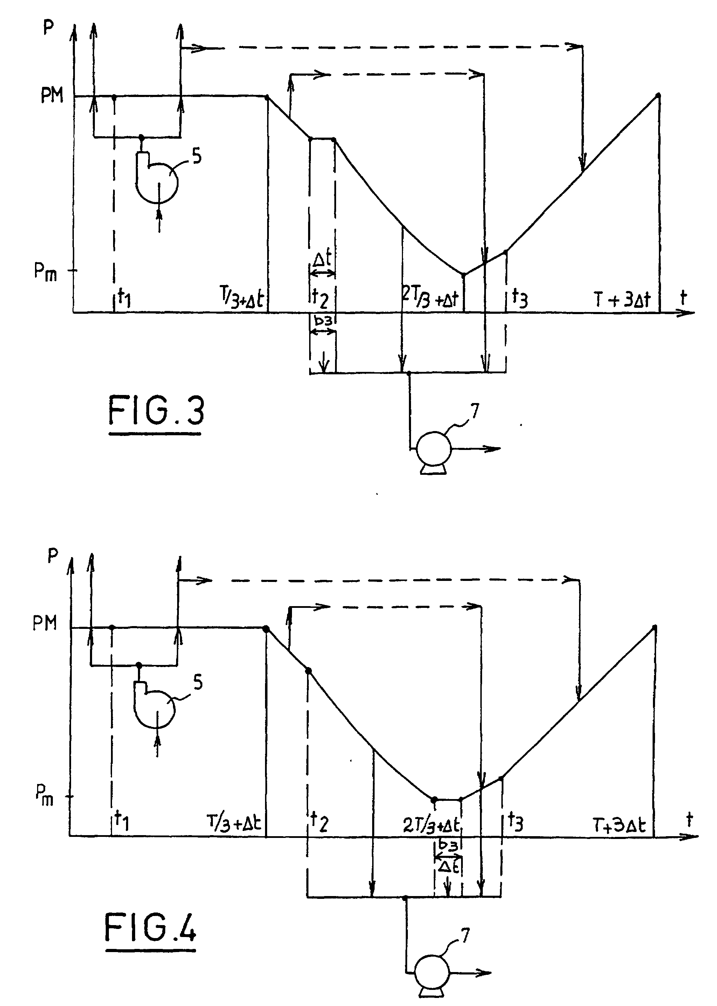

Lorsque la demande en oxygène baisse, on modifie le cycle, suivant un premier mode de mise en oeuvre de l'invention, de la manière illustrée à la Figure 3.

Entre la fin de l'étape (b1) et le début de l'étape (b2), on intercale une étape supplémentaire (b3), de durée Δt, au cours de laquelle les deux extrémités de l'adsorbeur sont obturées tandis que l'aspiration de la pompe 7 est reliée à l'atmosphère. Les étapes (a2) et (c2) sont allongées de la même durée Δt, de sorte que la durée totale du cycle devient T + 3 Δt.

De préférence, pour que l'état de régénération des adsorbeurs soit le même qu'en fonctionnement nominal, il est souhaitable que l'adsorbeur traite la même quantité de gaz, pendant chaque phase, c'est-à-dire que la relation suivante soit vérifiée :

$$D_r \times (T/3 + \Delta t) = d_n \times T/3,$$

où $D_r$ et $D_n$ désignent respectivement le débit réduit et le débit nominal.

On tire de cette relation :

$$\Delta t = T/3 \times (D_n - D_r) / D_r.$$

De cette manière, la pression d'aspiration moyenne de la pompe est relevée en débit réduit, ce qui réduit la différence de pression aux bornes de cette pompe. Comme la vitesse de la pompe, et donc le volume pompé par unité de temps, sont constants, la puissance consommée par la pompe est réduite.

L'étape supplémentaire (b3) peut, en variante, commencer à un autre instant de la phase (b). Ainsi, dans l'exemple de la Figure 4, elle se situe à la fin de cette phase (b), c'est-à-dire lorsque l'adsorbeur est à la pression basse du cycle $P_m$.

Les procédés des Figures 3 et 4 permettent de réaliser des économies d'énergie substantielles à débits réduits. Ainsi, à débit réduit de moitié, cette économie peut représenter de l'ordre du tiers de l'énergie consommée en fonctionnement nominal.

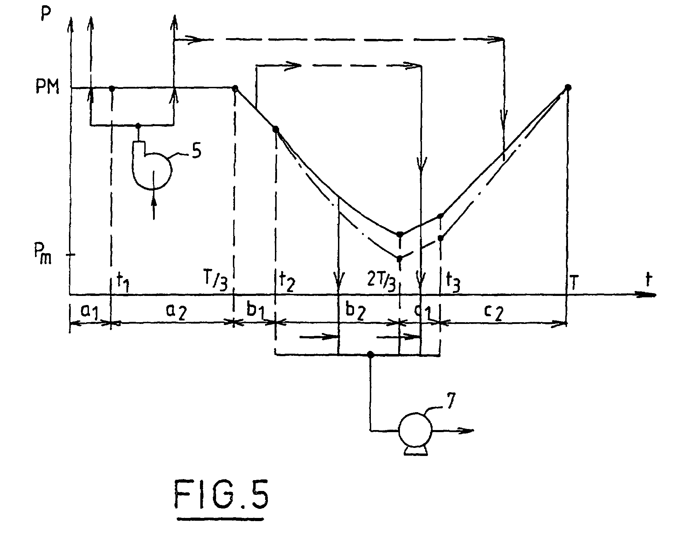

Dans l'exemple de la Figure 5, en fonctionnement à débit réduit, on relève la pression d'aspiration de la pompe en reliant en permanence l'aspiration de celle-ci non seulement à la sortie de l'adsorbeur en cours d'étapes (b2) et (c1), mais également à l'atmosphère, via la conduite 12 et la vanne 13 ouverte dans une mesure prédéterminée, ceci sans modifier la durée T du cycle. La courbe du diagramme se déforme alors vers le haut entre les instants t2 et T, de la configuration en traits mixtes, identique à celle de la Figure 2, à la configuration en traits pleins.

Dans cet exemple, la régénération moins poussée de l'absorbant, en fonctionnement à débit réduit, n'est pas pénalisante puisque le volume d'absorbant disponible est alors excédentaire.

En variante, la conduite 12 pourrait être reliée à une source d'un autre gaz approprié, par exemple de gaz résiduaire de l'installation, disponible sous une pression supérieure à la pression moyenne d'aspiration de la pompe à vide pendant le fonctionnement nominal.

En variante également, le gaz auxiliaire pourrait n'intervenir que pendant une fraction du cycle, au moyen d'une temporisation ou à partir d'un niveau prédéterminé d'abaissement de pression.

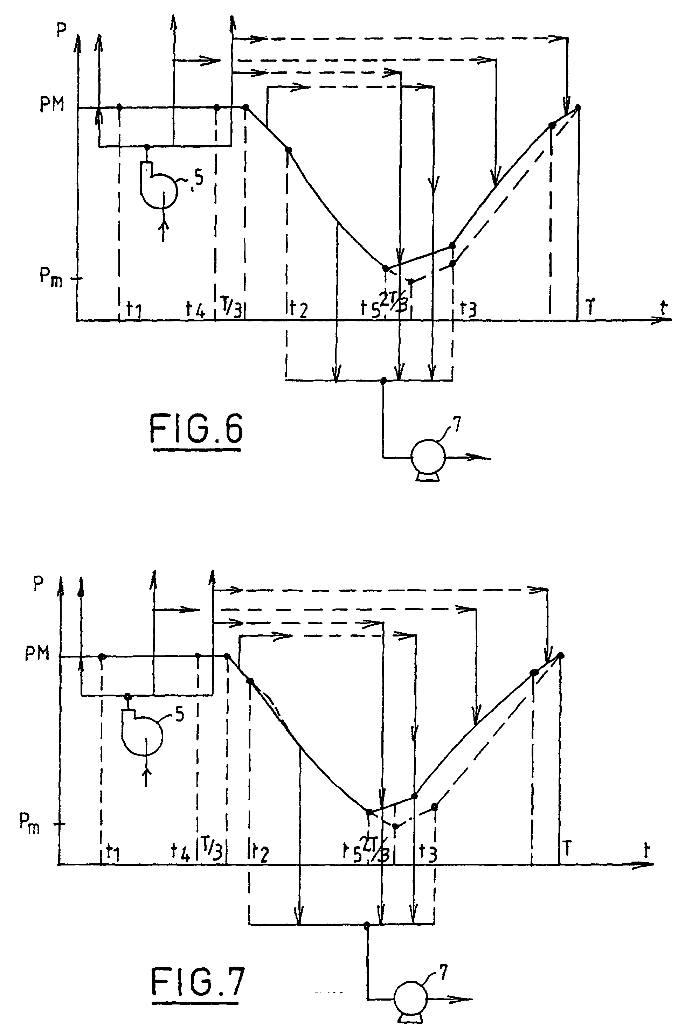

Dans l'exemple de la Figure 6, en fonctionnement à débit réduit, d'un instant T/4 < T3 à T/3, on prélève une fraction de l'oxygène produit, que l'on envoie à la sortie d'un autre adsorbeur en fin de phase (b), et donc dont l'entrée est reliée à l'aspiration de la pompe. Ainsi, d'un instant t5 à 2T/3, cet autre adsorbeur subit une élution supplémentaire et une pré-recompression.

On a de nouveau représenté sur la Figure 6 d'une part, en traits mixtes, la courbe correspondant au fonctionnement nominal, et d'autre part, en traits pleins, celle correspondant au fonctionnement à débit réduit. L'expérience montre que, là encore, la baisse de débit est accompagnée d'une baisse de la puissance consommée par la pompe.

L'exemple de la Figure 7 diffère de celui de la Figure 6 par le fait que l'on a en outre raccourci par la droite l'étape (b1) de décompression à co-courant, ainsi bien entendu que l'étape concomitante (c1). L'économie d'énergie est ainsi augmentée.

On comprend que les diverses modifications au cycle nominal décrites en regard des Figures 3 à 7 peuvent, le cas échéant, être combinées entre elles, ou utilisées l'une ou l'autre suivant la réduction du débit de production.

On comprend par ailleurs que les procédés décrits ci-dessus permettent d'économiser de l'énergie non seulement à débit de production réduit et à pureté constante de l'oxygène produit, comme susmentionné, mais également en cas de réduction de pureté de l'oxygène produit et sans réduction du débit de production.

## Revendications

1. Procédé de traitement d'un mélange gazeux et fourniture d'un gaz de production extrait de ce mélange gazeux dans une unité à adsorption à variation de pression (PSA) entre une pression haute de cycle (PM) et une pression basse de cycle (Pm) utilisant trois adsorbeurs (1 à 3) dans chacun desquels on effectue, pour une production nominale donnée, un cycle comprenant les phases successives suivantes, le cycle étant décalé d'un adsorbeur à l'autre d'un tiers de la durée nominale (T) du cycle :

   (a) une phase d'adsorption sensiblement isobare à la pression haute (PM) du cycle, par circulation du mélange dans l'adsorbeur dans un sens dit co-courant et fourniture du gaz de production ;

(b) une phase de désorption, à des pressions inférieures à la pression haute de cycle (PM), comprenant une étape (b2) de pompage jusqu'à la pression basse (Pm) du cycle, inférieure à la pression atmosphérique, au moyen d'une pompe à vide (7) à vitesse constante et à fonctionnement continu refoulant au voisinage de la pression atmosphérique ; et

(c) une phase de repressurisation de l'adsorbeur jusqu'à la pression haute du cycle,

dans lequel, lors d'une production à débit réduit du gaz de production, l'on ajuste l'unité au nouveau débit, sans modification de la pureté du gaz de production, en adressant, pendant au moins une partie de ladite étape de pompage, à l'admission (6) de la pompe (7) un gaz auxiliaire ou un gaz de production, afin de relever la pression moyenne d'aspiration de la pompe pour réduire la différence de pression aux bornes de ladite pompe.

2. Procédé suivant la revendication 1, **caractérisé en ce que**, lors d'une réduction du débit de production, pendant une fraction (b3) de l'étape de pompage, on relie l'aspiration de la pompe (7) uniquement à une source extérieure dudit gaz auxiliaire.

3. Procédé suivant la revendication 2, **caractérisé en ce que** la durée du cycle est allongée de trois fois la durée ($\Delta$T) de ladite fraction (b3).

4. Procédé suivant la revendication 1, **caractérisé en ce que**, lors d'une réduction du débit de production, pendant au moins une fraction de l'étape de pompage, on relie l'aspiration de la pompe (7) à la fois à un adsorbeur (1 à 3) en phase de désorption et à une source extérieure dudit gaz auxiliaire.

5. Procédé suivant la revendication 1, **caractérisé en ce que**, lors d'une réduction du débit de production, pendant une fraction finale de la phase d'adsorption (a), on envoie du gaz de production à la sortie de l'adsorbeur dont l'entrée est reliée à l'aspiration (6) de la pompe (7).

6. Procédé selon l'une des revendications précédentes, **caractérisé en ce que** la phase (b) de désorption comprend une étape initiale (b1) de décompression à co-courant et la phase (c) de recompression comprend une étape initiale (c1) d'élution à contre-courant par du gaz issu d'un autre adsorbeur en cours d'étape (b1) de décompression à co-courant.

7. Procédé suivant la revendication 6, **caractérisé en ce que** la phase de recompression comprend une étape (c2) de repressurisation à contre-courant par du gaz de production.

8. Procédé selon la revendication 6 ou la revendication 7, **caractérisé en ce que**, lors d'une réduction de débit de production, on passe plus tôt de l'étape (b1) à l'étape (b2).

9. Procédé selon l'une des revendications précédentes, **caractérisé en ce que** le mélange gazeux à séparer est de l'air.

10. Procédé selon la revendication 9, **caractérisé en ce que** la pression haute de cycle est comprise entre 1 x $10^5$ Pa et 1,2 x $10^5$ Pa.

**Patentansprüche**

1. Verfahren zur Behandlung eines Gasgemischs und Bereitstellung eines aus diesem Gasgemisch gewonnenen Produktgases in einer Druckwechseladsorptionseinheit (PSA-Einheit) mit Druckwechsel zwischen einem hohen Zyklusdruck (PM) und einem niedrigen Zyklusdruck (Pm) mit drei Adsorbern (1 bis 3), in denen jeweils für eine gegebene Nominalproduktion ein Zyklus mit den folgenden aufeinanderfolgenden Phasen durchgeführt wird, wobei der Zyklus von einem Adsorber zum anderen um ein Drittel der Nominaldauer (T) des Zyklus verschoben ist:

(a) eine im wesentlichen isobare Adsorptionsphase bei dem hohen Zyklusdruck (PM), bei der das Gemisch den Adsorber im Gleichstrom durchströmt und das Produktgas liefert,

(b) eine Desorptionsphase bei unter dem hohen Zyklusdruck (PM) liegenden Drücken mit einem Pumpschritt (b2), bei dem mit Hilfe einer mit konstanter Geschwindigkeit und kontinuierlich betriebenen und einen Ausstoß in der Nähe des Normaldrucks aufweisenden Vakuumpumpe (7) bis zum unter Normaldruck liegenden niedrigen Zyklusdruck (Pm) gepumpt wird, und

(c) eine Phase, bei der der Adsorber erneut auf den hohen Zyklusdruck gebracht wird,

bei dem man bei einer Produktion mit reduzierter Durchflußmenge des Produktgases die Einheit ohne Änderung der Produktgasreinheit auf eine neue Durchflußmenge einstellt, indem man während mindestens eines Teils des Pumpschritts dem Einlaß (6) der Pumpe (7) ein Hilfsgas oder ein Produktgas zuführt, wodurch der durchschnittliche Saugdruck der Pumpe zwecks Verringerung der Druckdifferenz über die Pumpe erhöht wird.

2. Verfahren nach Anspruch 1, **dadurch gekennzeichnet, daß** man bei einer Verringerung der Produktionsdurchflußmenge während eines Bruchteils (b3) des Pumpschritts die Ansaugung der Pumpe (7) lediglich mit einer externen Quelle des Hilfsgases verbindet.

3. Verfahren nach Anspruch 2, **dadurch gekennzeichnet, daß** man die Zyklusdauer um das Dreifache der Dauer (ΔT) des Bruchteils (b3) verlängert.

4. Verfahren nach Anspruch 1, **dadurch gekennzeichnet, daß** man bei einer Verringerung der Produktionsdurchflußmenge während mindestens eines Bruchteils des Pumpschritts die Ansaugung der Pumpe (7) gleichzeitig mit einem Adsorber (1 bis 3) in der Desorptionsphase und mit einer externen Quelle des Hilfsgases verbindet.

5. Verfahren nach Anspruch 1, **dadurch gekennzeichnet, daß** man bei einer Verringerung der Produktionsdurchflußmenge während eines letzten Bruchteils der Adsorptionsphase (a) dem Ausgang des Adsorbers, dessen Eingang mit der Ansaugung (6) der Pumpe (7) verbunden ist, Produktgas zuführt.

6. Verfahren nach einem der vorhergehenden Ansprüche, **dadurch gekennzeichnet, daß** die Desorptionsphase (b) einen Anfangsschritt (b1) enthält, bei dem eine Gleichstrom-Druckminderung durchgeführt wird, und die Wiederverdichtungsphase (c) einen Anfangsschritt (c1) enthält, bei dem mit dem im Lauf des Gleichstrom-Druckminderungsschritts (b1) von einem anderen Adsorber kommendes Gas im Gegenstrom eluiert wird.

7. Verfahren nach Anspruch 6, **dadurch gekennzeichnet, daß** die Wiederverdichtungsphase einen Schritt (c2) enthält, bei dem man das Produktgas im Gegenstrom erneut auf Druck bringt.

8. Verfahren nach Anspruch 6 oder 7, **dadurch gekennzeichnet, daß** man bei einer Verringerung der Produktionsdurchflußmenge früher von Schritt (b1) zu Schritt (b2) übergeht.

9. Verfahren nach einem der vorhergehenden Ansprüche, **dadurch gekennzeichnet, daß** man als zu trennendes Gasgemisch Luft verwendet.

10. Verfahren nach Anspruch 9, **dadurch gekennzeichnet, daß** der hohe Zyklusdruck zwischen 1 x $10^5$ Pa und 1,2 x $10^5$ Pa liegt.

**Claims**

1. Process for treating a gas mixture and delivering a production gas extracted from this gas mixture in a pressure swing adsorption (PSA) unit between a high cycle pressure (PM) and a low cycle pressure (Pm) using three adsorbers (1 to 3), in each of which, for a given nominal output, a cycle comprising the following successive phases is carried out, the cycle being offset from one adsorber to the other by a third of the nominal duration (T) of the cycle:

(a) an approximately isobaric adsorption phase at the high pressure (PM) of the cycle, by flow of the mixture in the adsorber in a so-called co-current direction and delivery of the production gas;
(b) a desorption phase, at pressures below the high cycle pressure (PM), comprising a step (b2) of pumping to the low cycle pressure (Pm), which is below atmospheric pressure, by means of a continuously operating constantspeed vacuum pump (7) delivering at near atmospheric pressure; and
(c) a phase of repressurizing the adsorber up to the high pressure of the cycle,

in which process, during production with a reduced output of production gas, the unit is adjusted to the new output without modifying the purity of the production gas, by sending, during at least part of the said pumping step, an auxiliary gas or a production gas to the intake (6) of the pump (7) so as to raise the average suction pressure of the pump in order to reduce the pressure difference across the terminals of the said pump.

2. Process according to Claim 1, **characterized in that**, during a reduction in production output, for a fraction (b3) of the pumping step, the suction of the pump (7) is connected only to an external source of the said auxiliary gas.

3. Process according to Claim 2, **characterized in that** the duration of the cycle is lengthened by three times the duration (ΔT) of the said fraction (b3).

4. Process according to Claim 1, **characterized in that**, during a reduction in the production output, for at least a fraction of the pumping step, the suction of the pump (7) is connected both to an adsorber (1 to 3) in the desorption phase and to an external source of the said auxiliary gas.

5. Process according to Claim 1, **characterized in that**, during a reduction in the production output, for a final fraction of the adsorption stage (a), production gas is sent to the outlet of the adsorber, the inlet of which is connected to the suction (6) of the pump (7).

6. Process according to one of the preceding claims, **characterized in that** the desorption phase (b) includes an initial step (b1) of co-current decompression and the recompression phase (c) includes an initial step (c1) of counter-current elution by gas coming from another adsorber during the co-current decompression step (b1).

7. Process according to Claim 6, **characterized in that** the recompression phase includes a step (c2) of counter-current repressurization by production gas.

8. Process according to Claim 6 or Claim 7, **characterized in that**, during a reduction in production output, the change from step (b1) to step (b2) is made earlier.

9. Process according to one of the preceding claims, **characterized in that** the gas mixture to be separated is air.

10. Process according to Claim 9, **characterized in that** the high cycle pressure is between $1 \times 10^5$ Pa and $1.2 \times 10^5$ Pa.

# FIG.1

# FIG.2

FIG.3

FIG.4

FIG.5

FIG.6

FIG.7